# FASCICULE DE BREVET EUROPEEN

(11) **EP 4 041 799 B1**
(45) Date de publication et mention de la délivrance du brevet: **29.11.2023**
(21) Numéro de dépôt: 20793767.3
(22) Date de dépôt: 08.10.2020
(51) Int. Cl.: C08G 65/329, C08L 15/00, C08L 71/02, C08K 5/5317, B60C 1/00

(54) **COMPOSITIONS DE CAOUTCHOUC COMPRENANT UN ELASTOMERE DIENIQUE EPOXYDE ET UN SYSTEME DE RETICULATION**
KAUTSCHUKMISCHUNGEN, DIE EIN EPOXID-DIENELASTOMER UMFASSEN, UND EIN VERNETZUNGSSYSTEM
RUBBER COMPOSITIONS COMPRISING AN EPOXIDE DIENE ELASTOMER AND A CROSS-LINKING SYSTEM

(30) Priorité: 10.10.2019 FR 1911279
(43) Date de publication de la demande: 17.08.2022
(73) Titulaire: COMPAGNIE GENERALE DES ETABLISSEMENTS MICHELIN, 63000 Clermont-Ferrand (FR)
(72) Inventeur: JASSELIN, Adeline, 63040 CLERMONT-FERRAND Cedex 9 (FR); JEAN-BAPTISTE-DIT-DOMINIQUE, François, 63040 CLERMONT-FERRAND Cedex 9 (FR); CHATARD, Camille, 34160 CASTRIES (FR); LOUBAT, Cédric, 34160 CASTRIES (FR)
(74) Mandataire: M.F.P. Michelin
(86) Numéro de dépôt international: PCT/FR2020/051773
(87) Numéro de publication internationale: WO 2021/069840

(56) Documents cités:
- FR-A1- 2 999 586
- BELKHOUCHE N E ET AL: "Study of new organophosphorus derivates carriers on the selective recovery of M (II) and M (III) metals, using supported liquid membrane extraction", JOURNAL OF MEMBRANE SCIENCE, ELSEVIER BV, NL, vol. 284, no. 1-2, 1 novembre 2006 (2006-11-01), pages 398-405, XP024931728, ISSN: 0376-7388, DOI: 10.1016/J.MEMSCI.2006.08.011 [extrait le 2006-11-01]

## Description

### Domaine technique

La présente invention est relative aux compositions de caoutchouc diénique, en particulier aux compositions de caoutchouc diénique comprenant un système de réticulation autre qu'un système de vulcanisation.

### Technique antérieure

Il est connu, et habituel depuis de nombreuses années, d'utiliser dans des pneus des compositions de caoutchouc dont la matrice élastomérique est réticulée au soufre, cette réticulation est alors nommée vulcanisation. Le système de vulcanisation classique combine du soufre et au moins un accélérateur de vulcanisation. Cependant, il est également connu qu'un tel système pénalise la mise en oeuvre de la composition avant cuisson par le phénomène du grillage. On rappelle que le phénomène dit de "grillage" conduit rapidement, au cours de la préparation des compositions de caoutchouc, à des vulcanisations prématurées ("scorching"), à des viscosités à l'état cru très élevées, en fin de compte à des compositions de caoutchouc quasiment impossibles à travailler et à mettre en oeuvre industriellement.

Par conséquent, les systèmes de vulcanisation ont été perfectionnés au fil des années, en association avec les procédés de préparation des compositions de caoutchouc afin de maîtriser les inconvénients évoqués ci-dessus. Ainsi, les compositions sont souvent complexes et comprennent en plus du soufre, ou d'un agent donneur de soufre, des accélérateurs de vulcanisation, des activateurs, et éventuellement des retardateurs de vulcanisation.

En vue de simplifier les compositions et leur préparation, la Demanderesse a proposé par le passé des compositions de caoutchouc comprenant des systèmes de réticulation aussi performants que les systèmes de vulcanisation conventionnels. Ainsi, par exemple, les documents WO2014095582, WO2014095583, WO2014095585 et WO2014095586 décrivent des compositions de caoutchouc pour pneus à base d'au moins un polymère comprenant des fonctions époxydes, d'un système de réticulation dudit polymère comprenant un diacide carboxylique et d'un composé imidazole. Le polymère comprenant des fonctions époxydes est un élastomère diénique composant la matrice élastomère. Ces compositions présentent le double avantage d'une préparation simplifiée par rapport aux compositions classiques comprenant un système de vulcanisation, et de propriétés hystérétiques améliorées.

Il est toujours nécessaire d'améliorer les propriétés des compositions de caoutchouc qui entrent dans la fabrication des pneus afin d'améliorer les performances de ces derniers. En particulier l'amélioration des propriétés d'extensométrie de compositions de caoutchouc entrant dans la fabrication de pneus permet d'améliorer certaines propriétés de ces derniers, telles que, par exemple, l'endurance sous forte déformation. La durée de vie du pneu peut ainsi être améliorée.

Les objectifs que se sont fixés les Inventeurs est de disposer de compositions de caoutchouc utilisables pour la fabrication de pneus, simples de préparation et qui présentent de bonnes propriétés d'extensométrie, notamment des propriétés d'extensométrie améliorées par rapport aux compositions comprenant un système de réticulation à base d'un diacide carboxylique.

### Exposé de l'invention

Poursuivant leurs recherches, les Inventeurs ont à présent mis au point des compositions de caoutchouc particulières, utilisables pour la fabrication de pneus, pouvant être préparées de manière simplifiée par rapport aux compositions comprenant un système de vulcanisation, et pouvant présenter des propriétés d'extensométrie améliorées par rapport aux compositions comprenant un système de réticulation à base d'un diacide carboxylique.

### Résumé de l'invention

En conséquence, un premier objet de l'invention concerne une composition de caoutchouc contenant
- une matrice élastomère comprenant au moins un élastomère diénique comprenant des fonctions époxydes,
- au moins une charge renforçante, et
- un système de réticulation dudit polymère comprenant au moins un composé organo polyphosphoré de formule générale (I) 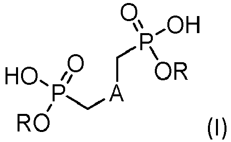
dans laquelle
- A représente une liaison covalente ou un groupement hydrocarboné comportant au moins 1 atome de carbone, éventuellement substitué et éventuellement comprenant un ou plusieurs hétéroatomes, et
- les R représentent, indépendamment l'un de l'autre, un groupement hydrocarboné comportant au moins 1 atome de carbone ou un atome d'hydrogène.

Préférentiellement, l'invention a pour objet une composition de caoutchouc telle que définie ci-dessus dans laquelle A représente une liaison covalente ou un groupement divalent hydrocarboné comportant au moins 1, de préférence au moins 2, plus préférentiellement au moins 4, et au plus 1800 atomes de carbone, de préférence au plus 300 atomes de carbone, plus préférentiellement au plus 100 atomes de carbone.

Préférentiellement également, l'invention a pour objet une composition de caoutchouc telle que définie ci-dessus dans laquelle A est un groupement hydrocarboné divalent de type aliphatique ou un groupement hydrocarboné divalent de type aromatique, ou un groupement divalent comportant au moins une partie aliphatique et une partie aromatique. De préférence, A est un groupement divalent de type aliphatique ou un groupement divalent comportant au moins une partie aliphatique et une partie aromatique.

De préférence, l'invention a pour objet une composition de caoutchouc telle que définie ci-dessus dans laquelle A est un groupement hydrocarboné comportant au moins 1 atome de carbone et comprenant au moins un hétéroatome choisi parmi l'oxygène, l'azote et le soufre, de préférence l'oxygène.

En particulier, l'invention a pour objet une composition de caoutchouc telle que définie ci-dessus dans laquelle A est un groupement divalent de type aliphatique ou un groupement divalent comportant au moins une partie aliphatique et une partie aromatique, lequel groupement comprend ou non au moins un atome d'oxygène.

Préférentiellement, l'invention a pour objet une composition de caoutchouc telle que définie ci-dessus dans laquelle les R représentent, indépendamment l'un de l'autre, un atome d'hydrogène ou un groupement alkyle ayant de 1 à 20 atomes de carbone, de préférence 1 à 12 atomes de carbone, cycloalkyle ayant de 5 à 24 atomes de carbone, aryle ayant de 6 à 30 atomes de carbone ou aralkyle ayant de 7 à 25 atomes de carbone.

De préférence également, l'invention a pour objet une composition de caoutchouc telle que définie ci-dessus dans laquelle les R sont identiques. Plus préférentiellement, les R sont identiques et représentent un atome d'hydrogène ou un groupement alkyle ayant de 1 à 12 atomes de carbone.

Préférentiellement, l'invention a pour objet une composition de caoutchouc telle que définie ci-dessus dans laquelle le taux de composés organo polyphosphorés est d'au moins 0,2 pce et d'au plus 20 pce, de préférence compris dans un domaine allant de 0,2 pce à 10 pce.

De préférence, l'invention a pour objet une composition de caoutchouc telle que définie ci-dessus dans laquelle la charge renforçante comporte du noir de carbone, de la silice ou un mélange de noir de carbone et de silice. Préférentiellement, l'invention a pour objet une composition de caoutchouc telle que définie ci-dessus dans laquelle le taux de charge renforçante est comprise entre 20 et 180 pce.

L'invention a également pour objet un pneu comprenant une composition de caoutchouc telle que définie ci-dessus. Les pneus conformes à l'invention sont notamment destinés à des véhicules automobiles.

L'invention a également pour objet un composé organo polyphosphorés de formule (II) 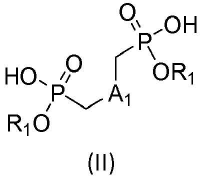 dans laquelle
- les R1 représentent, indépendamment l'un de l'autre, un groupement hydrocarboné comportant au moins 1 atome de carbone ou un atome d'hydrogène, et
- A1 représente un groupement divalent hydrocarboné majoritairement composé de motifs du type (IIa),

   -(O-R')ₙ- (IIa)
dans lequel R' représente un groupement divalent hydrocarboné comportant au moins 1 atome de carbone et n représente un entier supérieur ou égal à 2.

De préférence, le composé organo polyphosphoré de formule (II) est caractérisé en ce que dans la formule (IIa), R' est un groupement polyméthylène de formule -(CH₂)m-, m représentant un entier supérieur ou égal à 2, de préférence d'au plus 10, plus préférentiellement de 2 à 5, et n représente un entier d'au plus 20.

De préférence encore, le composé organo polyphosphoré de formule (II) répond plus particulièrement à la formule générale (IIb) : 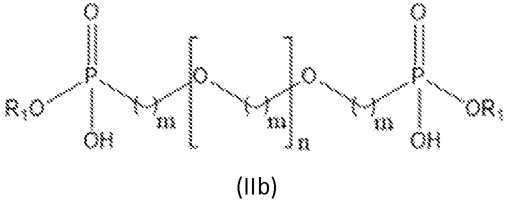 m représentant un entier supérieur ou égal à 2 et d'au plus 10, préférentiellement de 2 à 5, et n représentant un entier d'au plus 20, les R1 étant tels que décrits plus haut.

L'invention ainsi que ses avantages seront aisément compris à la lumière de la description et des exemples de réalisation qui suivent.

### Description détaillée

### I. Composition de caoutchouc de l'invention

La composition de caoutchouc selon l'invention contient au moins
- une matrice élastomère comprenant au moins un élastomère diénique comprenant des fonctions époxydes,
- une charge renforçante, et
- un système de réticulation dudit élastomère comprenant un composé organo polyphosphoré de formule générale (I) 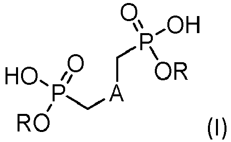
dans laquelle
- A représente une liaison covalente ou un groupement hydrocarboné comportant au moins 1 atome de carbone, éventuellement substitué et éventuellement comprenant un ou plusieurs hétéroatomes, et
- les R représentent, indépendamment l'un de l'autre, un groupement hydrocarboné comportant au moins 1 atome de carbone ou un atome d'hydrogène.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères.

Au contraire, un composé « minoritaire » est un composé qui ne représente pas la fraction massique la plus grande parmi les composés du même type.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

Lorsqu'on fait référence à une fonction «phosphonique », on entend au sens de la présente invention, la fonction « acide phosphonique » et la fonction « hémiester d'acide phosphonique ».

Par fonction « acide phosphonique », on entend au sens de la présente invention une fonction qui répond à la formule: 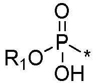 R1= H et -* représentant la liaison vers le reste de la molécule portant la fonction phosphonique.

Par fonction « hemiester d'acide phosphonique », on entend au sens de la présente invention, une fonction qui répond à la formule: 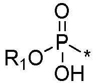 R1= alkyle et -* représentant la liaison vers le reste de la molécule portant la fonction phosphonique.

### I.1. Elastomère diénique comprenant des fonctions époxydes (ou élastomère époxydé)

Par élastomère ou caoutchouc (les deux termes étant de manière connue synonymes et interchangeables) diénique époxydé ou comprenant des fonctions époxydes, on rappelle que doit être entendu au sens large un élastomère synthétique ou naturel, lequel est fonctionnalisé, c'est-à-dire qu'il est porteur de groupes fonctionnels époxydes, que ceux-ci soient pendants le long de la chaîne élastomère ou dans la chaîne élastomère, y compris les extrémités de chaîne.

On préfère utiliser au moins un élastomère diénique, dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

De tels élastomères diéniques époxydés et leurs procédés d'obtention sont bien connus de l'homme du métier et disponibles commercialement. Des élastomères diéniques porteurs de groupes époxydes ont été décrits par exemple dans EP 0763564 A1 ou EP 1403287 A1.

Les caoutchoucs naturels époxydés (en abrégé "ENR"), par exemple, peuvent être obtenus de manière connue par époxydation du caoutchouc naturel, par exemple par des procédés à base de chlorohydrine ou de bromohydrine ou des procédés à base de peroxyde d'hydrogène, d'alkyl hydroperoxydes ou de peracides (tel que acide peracétique ou acide performique) ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Cray Valley sous la dénomination "Poly Bd" (par exemple "Poly Bd 605E"). Les SBR époxydés peuvent être préparés par des techniques d'époxydation bien connues de l'homme du métier.

Préférentiellement, l'élastomère diénique époxydé est choisi dans le groupe constitué par les caoutchoucs naturels (NR) époxydés (en abrégé "ENR"), les polyisoprènes (IR) de synthèse époxydés, les polybutadiènes (BR) époxydés, les copolymères de butadiène-styrène (SBR) époxydés et les mélanges de ces élastomères. De préférence encore, l'élastomère diénique époxydé est choisi dans le groupe constitué par les polymères du butadiène époxydés et leurs mélanges, particulièrement l'élastomère diénique époxydé est un copolymère styrène-butadiène époxydé (SBR).

Le taux (% molaire) d'époxydation des élastomères diéniques époxydés précédemment décrits peut varier dans une large part selon les modes de réalisation particuliers de l'invention, de préférence d'au moins 0,2%, plus préférentiellement d'au moins 2%, et de préférence d'au plus 60%, plus préférentiellement d'au plus 50%, encore plus préférentiellement d'au plus 20%. Quand le taux d'époxydation est inférieur à 0,2%, l'effet technique visé risque d'être insuffisant, tandis qu'au-delà de 60%, les propriétés de l'élastomère risquent d'être dénaturées et notamment le comportement élastomérique. Pour toutes ces raisons, le taux de fonctionnalisation, notamment d'époxydation, est plus préférentiellement compris dans un domaine de 2% à 20%.

Les compositions de caoutchouc de l'invention peuvent contenir un seul élastomère diénique époxydé ou un mélange de plusieurs élastomères diéniques époxydés (qu'on notera alors au singulier comme étant « l'élastomère diénique époxydé » pour représenter la somme des élastomères époxydés de la composition).

De manière préférentielle, la composition de caoutchouc de l'invention est dépourvue d'élastomère diénique non époxydé. Dit autrement, l'élastomère diénique époxydé, au sens large de la somme des élastomères diéniques époxydés, est préférentiellement le seul élastomère diénique dans la composition de caoutchouc de l'invention.

### I.2. Charge renforçante

On peut utiliser tout type de charge renforçante connue pour ses capacités à renforcer une composition de caoutchouc utilisable pour la fabrication de pneus, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneus (noirs dits de grade pneu). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneus, en d'autres termes apte à remplacer, dans sa fonction de renforcement, un noir de carbone conventionnel de grade pneu ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneu vélo, par exemple, est bien sûr inférieur à celui exigé sur un pneu apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge inorganique, particulièrement de la silice, et optionnellement de noir de carbone; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est inférieure à 20 pce. Typiquement le taux d'agent de couplage représente de 0,5% à 15% en poids par rapport à la quantité de charge inorganique. Dans les compositions de caoutchouc conformes à l'invention, la teneur en agent de couplage est préférentiellement comprise entre 3 et 12 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### I.3. Système de réticulation du polymère époxydé

A l'élastomère diénique époxydé et à la charge renforçante précédemment décrits est associé un système de réticulation, apte à la réticuler la composition du pneu selon l'invention. Ce système de réticulation comprend un (c'est-à-dire comprend au moins un) composé organo polyphosphoré de formule générale (I).

Le composé organo polyphosphoré utile pour les besoins de l'invention est un composé organo polyphosphoré de formule générale (I) 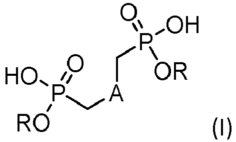 dans laquelle
- A représente une liaison covalente ou un groupement hydrocarboné comportant au moins 1 atome de carbone, éventuellement substitué et éventuellement comprenant un ou plusieurs hétéroatomes, et
- les R représentent, indépendamment l'un de l'autre, un atome d'hydrogène ou un groupement alkyle comportant au moins 1 atome de carbone.

Préférentiellement, l'invention a pour objet une composition de caoutchouc telle que définie ci-dessus dans laquelle A représente une liaison covalente ou un groupement divalent hydrocarboné comportant au moins 1, de préférence au moins 2, plus préférentiellement au moins 4 atomes de carbone. Préférentiellement également lorsque A représente un groupement divalent hydrocarboné, A représente un groupement divalent hydrocarboné comportant au plus 1800 atomes de carbone, de préférence au plus 300 atomes de carbone, plus préférentiellement au plus 100 atomes de carbone, plus préférentiellement encore au plus 65 atomes de carbones. De manière encore plus préférentielle, A représente une liaison covalente ou un groupement divalent hydrocarboné comportant de 4 à 100 atomes de carbone, de préférence de 4 à 65 atomes de carbone.

Préférentiellement également, dans le composé de formule générale (I), A est un groupement hydrocarboné divalent de type aliphatique ou aromatique, ou un groupement divalent comportant au moins une partie aliphatique et une partie aromatique. De préférence, A est un groupement divalent de type aliphatique ou un groupement divalent comportant au moins une partie aliphatique et une partie aromatique.

Dans le composé de formule générale (I), A peut comprendre au moins un hétéroatome choisi parmi l'oxygène, l'azote et le soufre, de préférence l'oxygène.

Egalement dans le composé de formule générale (I), A peut être substitué par au moins un radical choisi parmi les radicaux alkyle, cycloalkylalkyle, aryle, aralkyle, hydroxyle, alkoxy, amino (-NR"R‴, R" et R‴ étant H ou un radical alkyle) et carbonyle. Ces radicaux sont définis comme: alkyle ayant de 1 à 20 atomes de carbone, de préférence de 1 à 12 atomes de carbone, cycloalkyle ayant de 5 à 24 atomes de carbone, aryle ayant de 6 à 30 atomes de carbone et aralkyle ayant de 7 à 25 atomes de carbone.

Selon un mode de réalisation préférentiel, A ne comporte pas d'autre fonction phosphonique. Le composé organo polyphosphoré est alors un composé organo biphosphoré.

Selon un autre mode de réalisation préférentiel, dans le composé de formule générale (I), A est un groupement divalent de type aliphatique ou un groupement divalent comportant au moins une partie aliphatique et une partie aromatique, lequel groupement comprend ou non au moins un atome d'oxygène. Plus préférentiellement alors le composé de formule générale (I) ne comporte pas d'autre fonction phosphonique.

Préférentiellement, dans le composé de formule générale (I), les R représentent, indépendamment l'un de l'autre, un atome d'hydrogène ou un groupement alkyle ayant de 1 à 20 atomes de carbone, de préférence de 1 à 12 atomes de carbone, ou un groupement cycloalkyle ayant de 5 à 24 atomes de carbone, ou encore un groupement aryle ayant de 6 à 30 atomes de carbone ou un groupement aralkyle ayant de 7 à 25 atomes de carbone.

De préférence également, l'invention a pour objet une composition de caoutchouc telle que définie ci-dessus dans laquelle les R sont identiques.

Plus préférentiellement, les R sont identiques et représentent un atome d'hydrogène ou un groupement alkyle ayant de 1 à 12 atomes de carbone.

Le taux de composé organo polyphosphoré est préférentiellement d'au moins 0,2 et d'au plus 20 pce, de préférence compris dans un domaine allant de 0,2 à 10 pce. En dessous de 0,2 pce de composé organo polyphosphoré, l'effet de la réticulation n'est pas sensible tandis qu'au-delà de 20 pce de composé organo polyphosphoré, l'interaction gomme-charge peut être pénalisée ou encore la rigidité de la composition peut être réduite.

Les composés organo polyphosphorés utiles pour les besoins de l'invention sont soit disponibles dans le commerce, soit facilement préparés par l'homme de l'art selon des techniques bien connues telles que les voies chimiques décrites par exemple dans le document Yufeng Li et al., Molecules 2015, 20, 14435-14450; doi:10.3390/molecules200814435.

Par exemple, à titre de composés organo polyphosphorés utiles pour les besoins de l'invention, on peut citer l'acide phosphonique [1,4-phénylenebis(methylene)]bis-P,P'-diethylester (N° CAS 4546-05-8), l'acide phosphonique [1,1'-oxybisethyl]bis-P,P'-dihexylester (N° CAS 856638-06-7), l'acide phosphonique [1,12 dodécanediyl]bis-P,P'-diethylester (N° CAS 1229230-54-9) ;

Par exemple, à titre de composé organo polyphosphoré disponible dans le commerce et utile aux besoins de l'invention, on peut citer : l'acide xylylènebiphophonique de la société ABCR, l'acide méthylènebiphosphonique.

Selon un mode de réalisation de l'invention, le système de réticulation de la composition de caoutchouc selon l'invention peut contenir un imidazole. Un tel composé est connu de l'homme de l'art et notamment décrit dans les documents WO2014095582, WO2014095583, WO2014095585 et WO2014095586.

Selon ce mode de réalisation de l'invention, le taux d'imidazole est préférentiellement compris dans un domaine allant de 0,01 à 4 équivalents molaires, et de préférence de 0,01 à 3 équivalents molaires, par rapport aux fonctions phosphoniques présentes sur le composé organo polyphosphoré de formule générale (I).

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

Une composition comprenant un composé organo polyphosphoré de formule générale (I) et un imidazole peut être une composition dans laquelle ledit composé organo polyphosphoré et ledit imidazole ont préalablement réagi ensemble avant leur introduction dans la composition.

Selon un autre mode de réalisation de l'invention, la composition de caoutchouc selon l'invention ne contient pas d'imidazole. Selon ce mode de réalisation de l'invention, il est possible de manière surprenante et inattendue d'améliorer encore davantage les propriétés d'extensométrie d'une composition de caoutchouc selon l'invention par rapport à une composition selon l'invention contenant un imidazole. Ainsi, de préférence, les compositions de l'invention sont dépourvues d'imidazole, ou contiennent moins de 0,01 équivalents molaires d' imidazole, par rapport aux fonctions phosphoniques présentes sur le composé organo polyphosphoré de formule générale (I).

### I.4. Autres additifs

Les compositions de caoutchouc des pneus conformes à l'invention peuvent comporter également tout ou partie des additifs usuels habituellement utilisés dans les compositions d'élastomères destinées à la fabrication de pneus, comme par exemple des pigments, des agents de protection tels que cires anti-ozone, anti-ozonants chimiques, anti-oxydants, des agents anti-fatigue, des agents de réticulation autres que ceux précités, des résines renforçantes ou des agents plastifiants. De préférence, cet agent plastifiant est une résine hydrocarbonée solide (ou résine plastifiante), une huile d'extension (ou huile plastifiante), ou un mélange des deux.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

De manière préférentielle, les compositions de caoutchouc de l'invention sont dépourvues de système de réticulation autre que celui décrit précédemment qui comporte un composé organo polyphosphoré. Dit autrement, le système de réticulation à base d'au moins un composé organo polyphosphoré est préférentiellement le seul système de réticulation dans la composition de caoutchouc de l'invention. De préférence, les compositions de l'invention sont dépourvues de système de vulcanisation, ou contiennent moins de 1 pce de soufre, de préférence moins de 0,5 pce et plus préférentiellement moins de 0,2 pce. De même la composition est préférentiellement dépourvue de tout accélérateur de vulcanisation, tels qu'ils sont connus de l'homme du métier, ou en contient moins de 1 pce, de préférence moins de 0,5 pce et plus préférentiellement moins de 0,2 pce.

### I.5. Préparation des compositions de caoutchouc

Les compositions de caoutchouc de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 180°C, de préférence entre 130 et 160°C, suivie d'une seconde phase de travail mécanique (phase dite "productive") jusqu'à une plus basse température, typiquement inférieure à 110°C, par exemple entre 40°C et 100°C, phase de finition au cours de laquelle peut être incorporé le système de réticulation.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication du pneu de l'invention.

La composition de caoutchouc selon l'invention peut être utilisée dans différentes parties dudit pneu, ce dernier constituant également un objet de l'invention.

### II. Composé organo polyphosphoré

L'invention a également pour objet un composé organo polyphosphoré de formule générale (II) 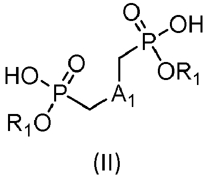 dans laquelle
- les R₁ représentent, indépendamment l'un de l'autre, un groupement hydrocarboné comportant au moins 1 atome de carbone ou un atome d'hydrogène, et
- A₁ représente un groupement divalent hydrocarboné majoritairement composé de motifs du type (IIa),

   -(O-R')ₙ- (IIa)
dans lequel R' représente un groupement divalent hydrocarboné comportant au moins 1 atome de carbone et n représente un entier supérieur ou égal à 2.

Préférentiellement, dans le composé de formule générale (II), les R₁ représentent, indépendamment l'un de l'autre, un atome d'hydrogène ou un groupement alkyle ayant de 1 à 20 atomes de carbone, de préférence de 1 à 12 atomes de carbone, ou un groupement cycloalkyle ayant de 5 à 24 atomes de carbone, ou encore un groupement aryle ayant de 6 à 30 atomes de carbone ou un groupement aralkyle ayant de 7 à 25 atomes de carbone, de préférence de 1 à 12 atomes de carbone.

Plus préférentiellement, les R₁ sont identiques et représentent un atome d'hydrogène ou un groupement alkyle ayant de 1 à 12 atomes de carbone.

Préférentiellement dans le composé de formule générale (II), n représente un nombre entier d'au plus 20.

Préférentiellement dans le composé de formule générale (IIa), R' est un groupement hydrocarboné aliphatique, préférentiellement linéaire ou ramifié, plus préférentiellement encore un groupement polyméthylène de formule -(CH₂)ₘ-, m représentant un entier supérieur ou égal à 2, de préférence d'au plus 10, plus préférentiellement allant de 2 à 5.

Préférentiellement le composé de formule générale (II), répond à la formule générale (Ilb) : 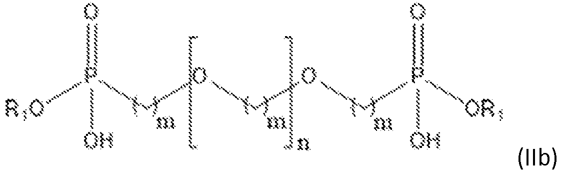
- m représentant un entier supérieur ou égal à 2 et d'au plus 10, préférentiellement allant de 2 à 5, et
- n représentant un entier d'au moins 2 et d'au plus 20, les R₁ étant tels que définis plus haut.

Les aspects préférentiels du composé de formule générale (II) concernant les définitions de R₁, R', m et n sont combinables entre eux.

### III. Exemples

### III.1. Synthèse hémiester phosphonique B

L'hémiester phosphonique B est représenté par la formule :

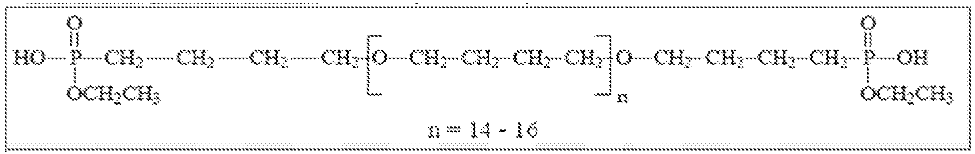

La préparation du polyTHF Bis Phosphonic Acid Monoethyl Ester (hémiester phosphonique B) nécessite quatre étapes de synthèse :
1^{ère} étape : Mésylation du polyTHF diol 1000 g/mol ;
2^{nde} étape : Synthèse du polyTHF dibromé par réaction du LiBr sur le polyTHF bis mésylate ;
3^{ème} étape : Synthèse du polyTHF diethyl phosphonate par réaction d'Arbuzov entre le polyTHF dibromé et la triethylphosphite ;
4^{ème} étape : Monohydrolyse à la soude du polyTHF diethyl phosphonate.

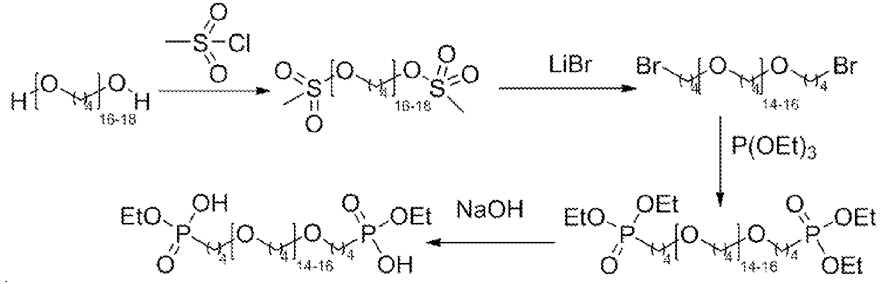

### 1^{ère} étape :

Dans un ballon bicol, solubiliser 100g (0.10mol ; 1éq) de polyTHF 1000 g/mol et 33.4g (0.33mol ; 3.3éq) de triéthylamine dans 1L de dichlorométhane. Se placer sous agitation magnétique à 0°C et sous flux d'argon, et additionner goutte à goutte 34.4g (0.30mol ; 3éq) de chlorure de mésyle. A la fin de l'addition, le milieu réactionnel est laissé sous agitation à température ambiante pendant 4h.

En fin de réaction, ajouter 1L de dichlorométhane, puis extraire avec 300 mL d'acide chlorhydrique 1M afin d'éliminer le chlorure de mésyle et la triéthylamine en excès, ainsi que le chlorure de triethylammonium formé au cours de la réaction. La phase chlorée est ensuite lavée avec 300 mL d'eau désionisée, puis séchée sur sulfate de sodium anhydre. Enfin, le dichlorométhane est éliminé par évaporation sous vide (50°C ; 0.1 mbar). L'élimination totale du dichlorométhane est essentielle afin d'éviter la mise en place d'une réaction secondaire lors de l'étape n°2 de bromination.

Le produit final est un liquide visqueux orange ; le rendement de synthèse est de 97% (111.7g).

### 2^{ème} étape :

Dans un ballon monocol, solubiliser 111.7g (0.09mol ; 1éq) de polyTHF Bis Mésylate dans 560 mL de N,N-Dimethylformamide. Ajouter 31.3g (0.36mol ; 4éq) de bromure de lithium. Se placer sous agitation magnétique à 100°C pendant 12h.

En fin de réaction, ajouter 2L d'acétate d'éthyle et extraire avec 5x300 mL d'eau désionisée afin d'éliminer le bromure de lithium en excès et le N,N-Dimethylformamide. La phase organique est ensuite séchée sur sulfate de sodium anhydre, puis les solvants sont éliminés par évaporation sous vide (70°C ; 0.1 mbar).

Le produit final est un liquide visqueux marron ; le rendement de synthèse est de 91% (98.9g).

### 3^{ème} étape :

Dans un ballon monocol, introduire 70g (0.058mol ; 1éq) de polyTHF dibromé et 96.1g (0.58mol ; 10éq) de triethylphosphite. Equiper le ballon d'un Dean Stark, lui-même surmonté d'un réfrigérant, puis placer le milieu sous agitation magnétique à 160°C pendant 8h. En fin de réaction, éliminer la triethylphosphite en excès ainsi que l'ethyl phosphonate de diethyle (sous-produit de la réaction) par distillation sous vide à 160°C.

Le produit final est un liquide visqueux jaune clair ; le rendement de synthèse est de 99.8% (77g).

### 4^{ème} étape :

Dans un ballon monocol, solubiliser 50g (0.039mol ; 1éq) de polyTHF Bis Phosphonate ET dans 80mL d'éthanol. Dans un bécher, préparer une solution aqueuse de soude en solubilisant 15.4g (0.39mol ; 10éq) d'hydroxyde de sodium dans 20 mL d'eau, puis l'additionner sur le polyTHF en solution dans l'éthanol. Se placer sous agitation magnétique à 40°C pendant 12h. En fin de réaction, ajouter 300 mL d'eau. Réacidifier le milieu jusqu'à pH 2 en additionnant goutte à goutte 43g d'acide chlorhydrique 37%. Ajouter 1.5L d'acétate d'éthyle et extraire avec 3x200mL d'eau. Sécher la phase organique sur sulfate de sodium anhydre, puis éliminer l'acétate d'éthyle par évaporation sous vide.

Le produit final est une cire marron ; le rendement de synthèse est de 74% (35.1g).

Le polyTHF Bis Phosphonic Acid Monoethyl Ester est caractérisé par spectroscopie de résonance magnétique nucléaire (RMN 1H).

Les analyses RMN¹H et ³¹P sont réalisées avec un Spectromètre Bruker Avance 300 (300 MHz), sonde QNP ¹H, ³¹P. Les échantillons sont solubilisés dans le chloroforme deutéré (CDCl₃).

**Tableau A:**

| Groupement chimique | Déplacement chimique en RMN ¹H (en ppm) |
|---|---|
| **CH₃**-CH₂-O | 1.32 |
| O-CH₂- **CH₂- CH₂-** CH₂-O et **CH₂**P | 1,5 à 1.9 |
| O- **CH₂-** CH₂- CH₂- **CH₂-**O | 3.43 |
| CH₃- **CH₂**-O | 4.1 |

**Tableau B:**

| Groupement chimique | Déplacement chimique en RMN ³¹P (en ppm) |
|---|---|
| **CH₃-** CH₂-O | 35.3 |

En résumé, les caractéristiques de l'hémiester phosphonique B sont les suivantes :

**Tableau C:**

| | |
|---|---|
| Composition | n=13.6 |
| Masse molaire | 1325 g/mol |
| Indice de fonction | 1.5 meq/g |
| Fonctionnalité | 2.0 |

### 111.2. Tests

Les compositions de caoutchouc sont caractérisées après cuisson, comme indiqué ci-après.

### III.2.a - Essais de traction

Ces essais de traction permettent de déterminer les propriétés à la rupture. Sauf indication différente, ils sont effectués conformément à la norme française NF T 46-002 de septembre 1988.

Les contraintes à la rupture (en MPa) et les allongements à la rupture (en %) sont mesurés à 23°C ± 2°C et à 100°C ± 2°C , selon la norme NF T 46-002.

### III.2.b Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique époxydé, la charge renforçante, le composé organo polyphosphoré et les autres additifs, ainsi que le cas échéant l'imidazole. On conduit alors un travail thermomécanique (phase non-productive) en une étape, qui dure au total environ 3 à 4 min, jusqu'à atteindre une température maximale de « tombée » de 180°C.

On récupère le mélange ainsi obtenu, on le refroidit puis les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### III.3. Compositions et Résultats

Les compositions selon l'invention présentent une facilité de préparation et une simplicité supérieure à une composition de caoutchouc conventionnelle (réticulée au soufre), tout en améliorant également les propriétés d'extensométrie de ces compositions par rapport aux compositions comprenant un système de réticulation à base d'un diacide carboxylique comme utilisé dans l'état de l'art.

Pour cela, des compositions de caoutchouc ont été préparées comme indiqué précédemment, dont certaines conformes à l'invention (C3, C4 et C5) et une non conforme comprenant un système de réticulation à base d'un diacide carboxylique (témoin C1) comme indiqué aux tableaux 1a (avec imidazole) et 1b (sans imidazole), les quantités étant exprimées en parties en poids.

Les propriétés des compositions C1 à C4 ont été mesurées comme indiqué précédemment et les résultats sont indiqués dans les tableaux 2a (avec imidazole) et 2b (sans imidazole), ainsi que le tableau 2c comparant l'effet de l'imidazole dans les compositions conformes à l'invention.

**Tableau 1a**

| **Composants** | **Diacide Carboxylique C4** | **Hemiester bisphosphonique A** | **Hemiester bisphosphonique B** | **Diacide phosphonique** |
|---|---|---|---|---|
| SBR-fonctionnel (1) | 100 | 100 | 100 | 100 |
| Silice (2) | 45 | 45 | 45 | 45 |
| Silane 1 (3) | 4.05 | 4.05 | 4.05 | 4.05 |
| Silane 2 (4) | 0.99 | 0.99 | 0.99 | 0.99 |
| Agent de mise en oeuvre (5) | 1 | 1 | 1 | 1 |
| 6PPD (6) | 3 | 3 | 3 | 3 |
| DPG (7) | 4 | 4 | 4 | 4 |
| Polyacide (8) | 0.4 | 1.11 | 4.5 | 0.91 |
| Imidazole (9) | 1.19 | 1.19 | 1.19 | 1.19 |

**Tableau 1b**

| **Composants** | **Diacide Carboxylique C4** | **Hemiester bisphosphonique A** | **Hemiester bisphosphonique B** | **Diacide phosphonique** |
|---|---|---|---|---|
| SBR-fonctionnel (1) | 100 | 100 | 100 | 100 |
| Silice (2) | 45 | 45 | 45 | 45 |
| Silane 1 (3) | 4.05 | 4.05 | 4.05 | 4.05 |
| Silane 2 (4) | 0.99 | 0.99 | 0.99 | 0.99 |
| Agent de mise en oeuvre (5) | 1 | 1 | 1 | 1 |
| 6PPD (6) | 3 | 3 | 3 | 3 |
| DPG (7) | 4 | 4 | 4 | 4 |
| Polyacide (8) | 0.4 | 1.11 | 4.5 | 0.91 |

| | | | | |
|---|---|---|---|---|
| *1. SBR 15.6 mol% Styrène, 12.5 mol% PB1-2 ; 69.8 %mol PB1-4 ; 2.1mol% de motifs glycidyles* *2. Silice 160MP, « Zeosil 1165MP » de la société Rhodia* *3. « Dynasylan Octeo » de la société Degussa* *4. « TESPT Si69 » de la société Degussa* *5. Paraffine 6266* *6. N-1.3-diméthylbutyl-N-phénylparaphénylènediamine (Santoflex 6-PPD de la société Flexsys)* *7. Diphénylguanidine* *8. Quantité de polyacide : 3.4 mmol* - *Diacide carboxylique carboxylique C4 « acide succinique » de la société Sigma-Aldrich, M= 118.09 g*/*mol* - *Hemiester bisphosphonique A M= 322.34 g*/*mol* 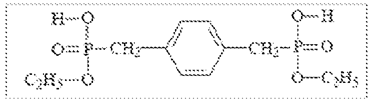 *synthétisé selon le mode opératoire décrit dans* Molécules 2015, 20, 14435-14450; doi:10.3390/molecules200814435*;* - *Hemiester bisphosphonique long B M= 1325,00 g*/*mol synthétisé ci-dessus, diacide phosphonique « p-Xylylenebisphosphonic acid » de la société ABCR* CAS 4546-06-09 *M=266.13g*/*mol* *9. 1-benzyl-2-méthylimidazole* CAS : 13750-62-4 *de la société Sigma-Aldrich* | | | | |

**Tableau 2a**

| Avec imidazole | | | | |
|---|---|---|---|---|
| Compositions | C1 | C2 | C3 | C4 |
| Agent de réticulation | diacide carboxylique | Hemiester bisphosphonique A | Hemiester bisphosphonique B | Diacide phosphonique |
| **Propriétés d'extensométrie à 23°C** | | | | |
| Allongement rupture (%) | 100 | 124 | 155 | 128 |
| Contrainte rupture moy. (Mpa) | 100 | 119 | 127 | 128 |

| **Propriétés d'extensométrie à 100°C** | | | | |
|---|---|---|---|---|
| Allongement rupture (%) | 100 | 164 | 188 | 106 |
| Contrainte rupture moy. (Mpa) | 100 | 171 | 155 | 107 |

| | | | | |
|---|---|---|---|---|
| *Diacide carboxylique = acide succinique de la Société Sigma-Aldrich* *Hemiester bisphosphonique A = acide phosphonique [1,4-phenylene(methylene)]bis-P,P'-diéthylester* *Hemiester bisphosphonique B = tel que synthétisé ci-dessus* *Diacide phosphonique = acide p-xylylenebiphosphonique de la Société ABCR* | | | | |

**Tableau 2b**

| SANS imidazole | | | | |
|---|---|---|---|---|
| Compositions | C1 | C2 | C3 | C4 |
| Agent de réticulation | diacide carboxylique | Hemiester bisphosphonique A | Hemiester bisphosphonique B | Diacide phosphonique |
| **Propriétés d'extensométrie à 23°C** | | | | |
| Allongement rupture (%) | 100 | 125 | 161 | 121 |
| Contrainte rupture moy. (Mpa) | 100 | 120 | 126 | 120 |

| **Propriétés d'extensométrie à 100°C** | | | | |
|---|---|---|---|---|
| Allongement rupture (%) | 100 | 178 | 230 | 121 |
| Contrainte rupture moy. (Mpa) | 100 | 191 | 203 | 128 |

| | | | | |
|---|---|---|---|---|
| *Diacide carboxylique = acide succinique de la Société Sigma-Aldrich* *Hemiester bisphosphonique A = acide phosphonique [1,4-phenylene(methylene)]bis-P,P'-diéthylester* *Hemiester bisphosphonique B = tel que synthétisé ci-dessus* *Diacide phosphonique = acide p-xylylenebiphosphonique de la Société ABCR* | | | | |

On note dans les compositions de l'invention que le remplacement du système de réticulation à base d'un diacide carboxylique par un système de réticulation à base d'un composé organo polyphosphoré de formule générale (I) permet d'obtenir une amélioration significative des propriétés d'extensométrie à basses et hautes températures. Cette amélioration est observée avec ou sans imidazole.

Ainsi, l'utilisation d'un système de réticulation à base d'un composé organo polyphosphoré dans une composition contenant un élastomère diénique époxydé permet de simplifier le système de réticulation et confère à la composition des propriétés d'extensométrie significativement améliorées par rapport à une composition comprenant un système de réticulation à base d'un diacide carboxylique.

**Tableau 2c**

| Compositions | C2 | | C3 | | C4 | |
|---|---|---|---|---|---|---|
| Agent de réticulation | Hemiester bisphosphonique A | | Hemiester bisphosphonique B | | Diacide phosphonique | |
| Propriétés d'extensométrie à 23°C | Avec imidazole | Sans imidazole | Avec imidazole | Sans imidazole | Avec imidazole | Sans imidazole |
| Allongement rupture (%) | 100 | 126 | 100 | 130 | 100 | 118 |
| Propriétés d'extensométrie à 100°C | Avec imidazole | Sans imidazole | Avec imidazole | Sans imidazole | Avec imidazole | Sans imidazole |
| Allongement rupture (%) | 100 | 121 | 100 | 136 | 100 | 127 |

| | | | | | | |
|---|---|---|---|---|---|---|
| *Hemiester bisphosphonique A = acide phosphonique [1,4-phenylene(methylene)]bis-P,P'-diéthylester* *Hemiester bisphosphonique B = tel que synthétisé ci-dessus* *Diacide phosphonique = acide p-xylylenebiphosphonique de la Société ABCR* | | | | | | |

On note également le caractère surprenant et inattendu de l'amélioration observée notamment au vu de l'absence d'imidazole dans la composition conforme à l'invention concernant les propriétés d'allongement à rupture.

Ainsi, l'utilisation d'un système de réticulation à base d'un composé organo polyphosphoré dans une composition contenant un élastomère diénique époxydé et étant dépourvue d'un imidazole permet de simplifier le système de réticulation et confère à la composition des propriétés d'extensométrie améliorées par rapport à une composition selon l'invention qui contient un imidazole.

## Revendications

1. Composition de caoutchouc contenant au moins
- une matrice élastomère comprenant au moins un élastomère diénique comprenant des fonctions époxydes,
- une charge renforçante, et
- un système de réticulation dudit polymère comprenant au moins un composé organo polyphosphoré de formule générale (I) 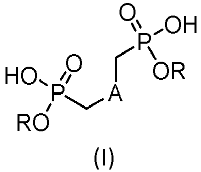
dans laquelle
- A représente une liaison covalente ou un groupement hydrocarboné comportant au moins 1 atome de carbone, éventuellement substitué et éventuellement comprenant un ou plusieurs hétéroatomes, et
- les R représentent, indépendamment l'un de l'autre, un groupement hydrocarboné comportant au moins 1 atome de carbone ou un atome d'hydrogène.

2. Composition de caoutchouc selon la revendication 1, **caractérisée en ce que** A représente une liaison covalente ou un groupement divalent hydrocarboné comportant au moins 1, de préférence au moins 2, plus préférentiellement au moins 4, et au plus 1800 atomes de carbone, de préférence au plus 300 atomes de carbone, plus préférentiellement au plus 100 atomes de carbone.

3. Composition de caoutchouc selon l'une quelconque des revendications précédentes, **caractérisée en ce que** A est un groupement hydrocarboné divalent de type aliphatique ou un groupement hydrocarboné divalent de type aromatique, ou un groupement divalent comportant au moins une partie aliphatique et une partie aromatique, de préférence A est un groupement divalent de type aliphatique ou un groupement divalent comportant au moins une partie aliphatique et une partie aromatique.

4. Composition de caoutchouc selon l'une quelconque des revendications précédentes, **caractérisée en ce que** A comprend au moins un hétéroatome choisi parmi l'oxygène, l'azote et le soufre, de préférence l'oxygène.

5. Composition de caoutchouc selon l'une quelconque des revendications précédentes, **caractérisée en ce que** A ne comporte pas d'autre fonction phosphonique.

6. Composition de caoutchouc selon l'une quelconque des revendications précédentes, **caractérisée en ce que** A est un groupement divalent de type aliphatique ou un groupement divalent comportant au moins une partie aliphatique et une partie aromatique, lequel groupement comprend ou non au moins un atome d'oxygène.

7. Composition de caoutchouc selon l'une quelconque des revendications précédentes, **caractérisée en ce que** les R représentent, indépendamment l'un de l'autre, un atome d'hydrogène ou un groupement alkyle ayant de 1 à 20 atomes de carbone, de préférence 1 à 12 atomes de carbone, cycloalkyle ayant de 5 à 24 atomes de carbone, aryle ayant de 6 à 30 atomes de carbone ou aralkyle ayant de 7 à 25 atomes de carbone.

8. Composition de caoutchouc selon l'une quelconque des revendications précédentes, **caractérisée en ce que** les R sont identiques et représentent un atome d'hydrogène ou un groupement alkyle ayant de 1 à 12 atomes de carbone.

9. Composition de caoutchouc selon l'une quelconque des revendications précédentes, **caractérisée en ce que** le taux de composés organo polyphosphorés est d'au moins 0,2 et d'au plus 20 pce, de préférence compris dans un domaine allant de 0,2 à 10 pce.

10. Composition de caoutchouc selon l'une quelconque des revendications précédentes, **caractérisée en ce que** la composition est dépourvue d'élastomère diénique non époxydé.

11. Pneu comprenant une composition de caoutchouc telle que définie dans l'une quelconque des revendications précédentes.

12. Composé organo polyphosphoré de formule générale (II) 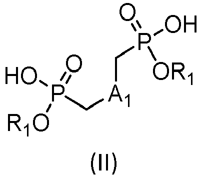 dans laquelle
- les R₁ représentent, indépendamment l'un de l'autre, un groupement hydrocarboné comportant au moins 1 atome de carbone ou un atome d'hydrogène, et
- A₁ représente un groupement divalent hydrocarboné majoritairement composé de motifs du type (IIa),
-(O-R')ₙ- (IIa)
dans lequel R' représente un groupement divalent hydrocarboné comportant au moins 1 atome de carbone et n représente un entier supérieur ou égal à 2.

13. Composé selon la revendication 12, **caractérisé en ce que** dans la formule (IIa), R' est un groupement polyméthylène de formule -(CH₂)ₘ-, m représentant un entier supérieur ou égal à 2, de préférence d'au plus 10, plus préférentiellement allant de 2 à 5, et n représente un entier d'au plus 20.

14. Composé selon la revendication 13, **caractérisé en ce qu'**il répond à la formule générale (IIb) : 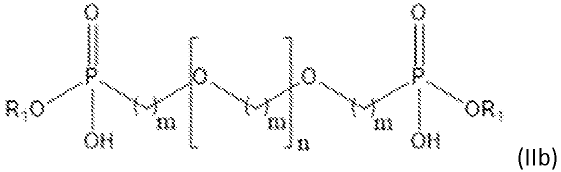
- m représentant un entier supérieur ou égal à 2 et d'au plus 10, préférentiellement allant de 2 à 5, et
- n représentant un entier d'au plus 20,
les R₁ représentant, indépendamment l'un de l'autre, un groupement hydrocarboné comportant au moins 1 atome de carbone ou un atome d'hydrogène.

## Patentansprüche

1. Kautschukzusammensetzung, mindestens enthaltend:
- eine Elastomermatrix, die mindestens ein Dienelastomer mit Epoxidfunktionen umfasst,
- einen verstärkenden Füllstoff und
- ein System zur Vernetzung des Polymers, das mindestens eine Organopolyphosphorverbindung der allgemeinen Formel (I) 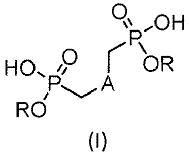
umfasst, wobei
- A für eine kovalente Bindung oder eine Kohlenwasserstoffgruppe mit mindestens 1 Kohlenstoffatom, die gegebenenfalls substituiert ist und gegebenenfalls ein oder mehrere Heteroatome umfasst, steht und
- die Reste R unabhängig voneinander für eine Kohlenwasserstoffgruppe mit mindestens 1 Kohlenstoffatom oder ein Wasserstoffatom stehen.

2. Kautschukzusammensetzung nach Anspruch 1, **dadurch gekennzeichnet, dass** A für eine kovalente Bindung oder eine zweiwertige Kohlenwasserstoffgruppe mit mindestens 1, vorzugsweise mindestens 2, weiter bevorzugt mindestens 4 und höchstens 1800 Kohlenstoffatomen, vorzugsweise höchstens 300 Kohlenstoffatomen, weiter bevorzugt höchstens 100 Kohlenstoffatomen, steht.

3. Kautschukzusammensetzung nach einem der vorhergehenden Ansprüche, **dadurch gekennzeichnet, dass** A eine zweiwertige Kohlenwasserstoffgruppe vom aliphatischen Typ oder eine zweiwertige Kohlenwasserstoffgruppe von aromatischen Typ oder eine zweiwertige Gruppe mit mindestens einem aliphatischen Teil und einem aromatischen Teil ist, vorzugsweise A eine zweiwertige Gruppe vom aliphatischen Typ oder eine zweiwertige mit mindestens einem aliphatischen Teil und einem aromatischen Teil ist.

4. Kautschukzusammensetzung nach einem der vorhergehenden Ansprüche, **dadurch gekennzeichnet, dass** A mindestens ein Heteroatom, das aus Sauerstoff, Stickstoff und Schwefel ausgewählt ist, vorzugsweise Sauerstoff, umfasst.

5. Kautschukzusammensetzung nach einem der vorhergehenden Ansprüche, **dadurch gekennzeichnet, dass** A keine weitere Phosphonfunktion umfasst.

6. Kautschukzusammensetzung nach einem der vorhergehenden Ansprüche, **dadurch gekennzeichnet, dass** A eine zweiwertige Gruppe vom aliphatischen Typ oder eine zweiwertige Gruppe mit mindestens einem aliphatischen Teil und einem aromatischen Teil ist, wobei die Gruppe gegebenenfalls mindestens ein Sauerstoffatom umfasst.

7. Kautschukzusammensetzung nach einem der vorhergehenden Ansprüche, **dadurch gekennzeichnet, dass** die Reste R unabhängig voneinander für ein Wasserstoffatom oder eine Alkylgruppe mit 1 bis 20 Kohlenstoffatomen, vorzugsweise 1 bis 12 Kohlenstoffatomen, eine Cycloalkylgruppe mit 5 bis 24 Kohlenstoffatomen, einer Arylgruppe mit 6 bis 30 Kohlenstoffatomen oder eine Alkylgruppe mit 7 bis 25 Kohlenstoffatomen stehen.

8. Kautschukzusammensetzung nach einem der vorhergehenden Ansprüche, **dadurch gekennzeichnet, dass** die Reste R gleich sind und für ein Wasserstoffatom oder eine Alkylgruppe mit 1 bis 12 Kohlenstoffatomen stehen.

9. Kautschukzusammensetzung nach einem der vorhergehenden Ansprüche, **dadurch gekennzeichnet, dass** der Gehalt an Organopolyphosphorverbindungen mindestens 0,2 und höchstens 20 phe beträgt vorzugsweise in einem Bereich von 0,2 bis 10 phe liegt.

10. Kautschukzusammensetzung nach einem der vorhergehenden Ansprüche, **dadurch gekennzeichnet, dass** die Zusammensetzung frei von nicht epoxidiertem Dienelastomer ist.

11. Reifen, umfassend eine Kautschukzusammensetzung gemäß einem der vorhergehenden Ansprüche.

12. Organopolyphosphorverbindung der allgemeinen Formel (II) 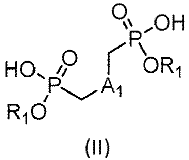 wobei
- die Reste R₁ unabhängig voneinander für eine Kohlenwasserstoffgruppe mit mindestens 1 Kohlenstoffatom oder ein Wasserstoffatom stehen und
- A₁ für eine zweiwertige Kohlenwasserstoffgruppe steht, die hauptsächlich aus Einheiten des Typs (IIa) besteht,
-(O-R')ₙ- (IIa)
wobei R' für eine zweiwertige Kohlenwasserstoffgruppe mit mindestens 1 Kohlenstoffatom steht und n für eine ganze Zahl größer oder gleich 2 steht.

13. Zusammensetzung nach Anspruch 12, **dadurch gekennzeichnet, dass** in Formel (IIa) R' für eine Polymethylengruppe der Formel -(CH₂)ₘ- steht, wobei m für eine ganze Zahl größer oder gleich 2, vorzugsweise von höchstens 10, weiter bevorzugt im Bereich von 2 bis 5, steht und n für eine ganze Zahl von höchstens 20 steht.

14. Verbindung nach Anspruch 13, **dadurch gekennzeichnet, dass** sie der allgemeinen Formel (IIb) entspricht: 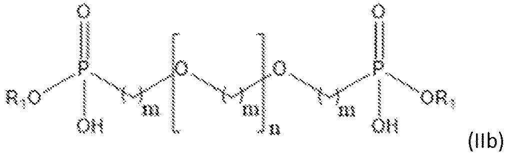
- wobei m für eine ganze Zahl größer oder gleich 2 und von höchstens 10, vorzugsweise im Bereich von 2 bis 5, steht und
- n für eine ganze Zahl von höchstens 20 steht, die Reste R₁ unabhängig voneinander für eine Kohlenwasserstoffgruppe mit mindestens 1 Kohlenstoffatom oder ein Wasserstoffatom stehen.

## Claims

1. Rubber composition containing at least:
- an elastomer matrix comprising at least one diene elastomer comprising epoxide functions,
- a reinforcing filler, and
- a system for crosslinking said polymer, comprising at least one organopolyphosphorus compound of general formula (I) 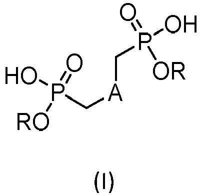
in which:
- A represents a covalent bond or a hydrocarbon group comprising at least 1 carbon atom, which is optionally substituted and which optionally comprises one or more heteroatoms, and
- the R represent, independently of one another, a hydrocarbon group comprising at least 1 carbon atom or a hydrogen atom.

2. Rubber composition according to Claim 1, **characterized in that** A represents a covalent bond or a divalent hydrocarbon group comprising at least 1, preferably at least 2, more preferentially at least 4, and at most 1800 carbon atoms, preferably at most 300 carbon atoms, more preferentially at most 100 carbon atoms.

3. Rubber composition according to either one of the preceding claims, **characterized in that** A is a divalent hydrocarbon group of aliphatic type or a divalent hydrocarbon group of aromatic type, or a divalent group comprising at least one aliphatic part and one aromatic part; preferably, A is a divalent group of aliphatic type or a divalent group comprising at least one aliphatic part and one aromatic part.

4. Rubber composition according to any one of the preceding claims, **characterized in that** A comprises at least one heteroatom selected from oxygen, nitrogen and sulfur, preferably oxygen.

5. Rubber composition according to any one of the preceding claims, **characterized in that** A does not comprise any other phosphonic function.

6. Rubber composition according to any one of the preceding claims, **characterized in that** A is a divalent group of aliphatic type or a divalent group comprising at least one aliphatic part and one aromatic part, which group optionally comprises at least one oxygen atom.

7. Rubber composition according to any one of the preceding claims, **characterized in that** the R represent, independently of one another, a hydrogen atom or an alkyl group having from 1 to 20 carbon atoms, preferably 1 to 12 carbon atoms, a cycloalkyl group having from 5 to 24 carbon atoms, an aryl group having from 6 to 30 carbon atoms or an aralkyl group having from 7 to 25 carbon atoms.

8. Rubber composition according to any one of the preceding claims, **characterized in that** the R are identical and represent a hydrogen atom or an alkyl group having from 1 to 12 carbon atoms.

9. Rubber composition according to any one of the preceding claims, **characterized in that** the content of organopolyphosphorus compounds is at least 0.2 and at most 20 phr, preferably within a range extending from 0.2 to 10 phr.

10. Rubber composition according to any one of the preceding claims, **characterized in that** the composition is devoid of non-epoxidized diene elastomer.

11. Tire comprising a rubber composition as defined in any one of the preceding claims.

12. Organopolyphosphorus compound of general formula (II) 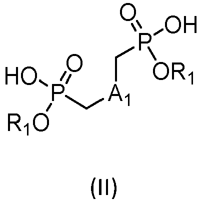 in which:
- the R₁ represent, independently of one another, a hydrocarbon group comprising at least 1 carbon atom or a hydrogen atom, and
- A₁ represents a divalent hydrocarbon group mainly composed of units of type (IIa),
-(O-R')ₙ- (IIa)
in which R' represents a divalent hydrocarbon group comprising at least 1 carbon atom and n represents an integer greater than or equal to 2.

13. Compound according to Claim 12, **characterized in that**, in formula (Ila), R' is a polymethylene group of formula -(CH₂)ₘ-, m representing an integer greater than or equal to 2, preferably at most 10, more preferentially ranging from 2 to 5, and n represents an integer of at most 20.

14. Compound according to Claim 13, **characterized in that** it corresponds to general formula (IIb): 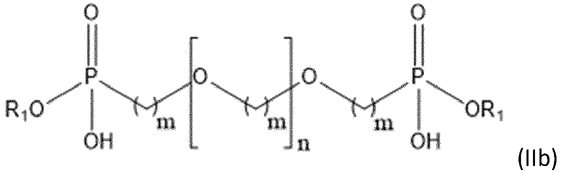
- m representing an integer greater than or equal to 2 and of at most 10, preferably ranging from 2 to 5, and
- n representing an integer of at most 20,
- the R₁ representing , independently of one another, a hydrocarbon group comprising at least 1 carbon atom or a hydrogen atom.
